# EUROPEAN PATENT APPLICATION

(11) **EP 4 604 631 A1**
(43) Date of publication of application: **20.08.2025**
(21) Application number: 23920822.6
(22) Date of filing: 22.11.2023
(51) Int. Cl.: H04W 56/00

(54) **INFORMATION PROCESSING MODE DETERMINATION METHOD, INFORMATION SENDING METHOD, APPARATUSES, AND STORAGE MEDIUM**

(30) Priority: 10.02.2023 CN 202310145306
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); ZHENG, Guozeng, Shenzhen, Guangdong 518057 (CN); LI, Yong, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/133295
(87) International publication number: WO 2024/164631

(57) **Abstract**

Provided are an information processing mode determination method, an information sending method, apparatuses, and a storage medium. The information processing mode determination method comprises: acquiring information processing mode parameters and M information processing mode identifiers, wherein the information processing mode parameters at least comprise a processing time threshold and/or running task related information, and M is a positive integer; and, according to the information processing mode parameters and the M information processing mode identifiers, determining an information processing mode.

## Description

The present disclosure claims a priority to Chinese Patent Application No. 202310145306.5, filed on February 10, 2023, which is hereby incorporated by reference in its entirety.

### TECHNICAL FIELD

The present disclosure relates to the technical field of communication, and in particular, to an information processing mode determination method, an information sending method, an apparatus, and a storage medium.

### BACKGROUND

Wireless communication system is ubiquitously deployed across numerous aspects of life, including, but not limited to video communication, voice communication, positioning, machine-to-machine (M2M) communication, and device-to-device (D2D) communication, etc. With the development of technology, various technologies (such as multi-antenna technology, artificial intelligence) have been applied to the wireless communication system.

### SUMMARY

In an aspect, there is provided an information processing mode determination method, where the information processing mode determination method is applied to a first node. The information processing mode determination includes:
acquiring an information processing mode parameter and M information processing mode identifiers, where the information processing mode parameter at least includes a processing time threshold and/or information related to an operating task, and M is a positive integer; and
determining an information processing mode according to the information processing mode parameter and the M information processing mode identifiers.

In another aspect, there is provided an information sending method, where the information sending method is applied to a second node. The information sending method includes:
acquiring an information processing mode parameter and M information processing mode identifiers, where the information processing mode parameter at least includes a processing time threshold and/or information related to an operating task, and M is a positive integer; and the information processing mode parameter and the M information processing mode identifiers are used to determine an information processing mode; and
sending the information processing mode parameter and the M information processing mode identifiers.

In yet another aspect, there is provided a communication apparatus. The communication apparatus includes:
an acquisition unit, configured to acquire an information processing mode parameter and M information processing mode identifiers, where the information processing mode parameter at least includes a processing time threshold and/or information related to an operating task, and M is a positive integer; and
a processing unit, configured to determine an information processing mode according to the information processing mode parameter and the M information processing mode identifiers.

In yet another aspect, there is provided a communication apparatus. The communication apparatus includes:
an acquisition unit, configured to acquire an information processing mode parameter and M information processing mode identifiers, where the information processing mode parameter at least includes a processing time threshold and/or information related to an operating task, and M is a positive integer; and the information processing mode parameter and the M information processing mode identifiers are used to determine an information processing mode; and
a sending unit, configured to send the information processing mode parameter and the M information processing mode identifiers.

In yet another aspect, there is provided a communication apparatus. The communication apparatus includes: a processor and a memory; where the memory stores instructions executable by the processor; in response that the processor is configured to execute the instructions, the communication apparatus is enabled to implement the method according to any one of above-mentioned aspects.

In yet another aspect, there is provided a computer-readable storage medium. The computer-readable storage medium stores computer instructions that, upon being run on a computer, enable the computer to execute the method according to any one of above-mentioned aspects.

In yet another aspect, there is provided a computer program product including computer instructions. In response that the computer instructions are run on a computer, the computer is enabled to execute the method according to any one of above-mentioned aspects.

### BRIEF DESCRIPTION OF THE DRAWINGS

FIG. 1 is a schematic diagram of an architecture of a communication system according to some embodiments.
FIG. 2 is a flowchart of an information processing mode determination method according to some embodiments.
FIG. 3 is a flowchart of an information sending method provided according to some embodiments.
FIG. 4 is a flowchart of another information sending method provided according to some embodiments.
FIG. 5 is a flowchart of another information processing mode determination method provided according to some embodiments.
FIG. 6 is a flowchart of an information processing method provided according to some embodiments.
FIG. 7 is a schematic diagram of a communication apparatus provided according to some embodiments.
FIG. 8 is a schematic diagram of another communication apparatus provided according to some embodiments.
FIG. 9 is a structural schematic diagram of a communication apparatus provided according to some embodiments.

### DETAILED DESCRIPTION

In order to enable those skilled in the art to better understand the technical solutions in the present disclosure, the technical solutions in the embodiments of the present disclosure will be described clearly and completely in conjunction with the accompanying drawings. Obviously, the described embodiments are merely a part of embodiments of the present disclosure, but not all of the embodiments of the present disclosure. All other embodiments obtained based on the embodiments of the present disclosure by those of ordinary skill in the art without paying any creative effort shall be included in the protection scope of the present disclosure.

It should be noted that all orientation indications (such as up, down, left, right, front, back, etc.) in the embodiments of the present disclosure are only used to explain relative position relationships, motion situations, etc., between various components under a certain specific posture (such as shown in an accompanying drawing). If the specific posture is changed, an orientation indication is correspondingly changed accordingly.

The terms "first", "second", etc., are merely used for a purpose of description, and are not to be understood as indicating or implying the relative importance or implicitly indicating the number of indicated technical features. Thus, features limited with the wordings of "first", "second", etc., may explicitly or implicitly include one or more of the features. In the description of the present disclosure, the terms of "multiple", "a plurality of" or "the plurality of" means a number of two or more than two.

In the description of the present disclosure, it should be noted that, unless otherwise clearly specified and limited, the terms "connect", "couple" or variations thereof should be understood in a broad sense. For example, a connection may be a fixed connection, or may also be a detachable connection, or an integral connection. For ordinary technical personnel in the art, the specific meanings of the above-mentioned terms in the present disclosure may be understood according to specific situations. In addition, when describing pipelines, the words "connect", "couple" or variations thereof used in the present disclosure have a meaning of conducting. The specific meaning needs to be understood in the context.

In the embodiments of the present disclosure, wordings such as "exemplarily" or "for example" and variations thereof are used to represent examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplarily" or "for example" is intended to present relevant concepts in a concrete way.

The technical solution provided by the embodiments of the present disclosure can be applied to various mobile communication networks, for example, new radio (NR) mobile communication networks using the fifth generation mobile communication technology (5th generation mobile networks, 5G), future mobile communication networks, or multiple communication convergence systems, etc., which is not limited in the embodiments of the present disclosure.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). It should be understood that in the embodiments of the present disclosure, a first node (also referred to as a first communication node device) may be a receiving-side device, and a second node (also referred to as a second communication node device) may be a network-side device, or the first node may be a network-side device and the second node may be a receiving-side device. Alternatively, in a device-to-device communication, both the first node and the second node may be base stations or terminals.

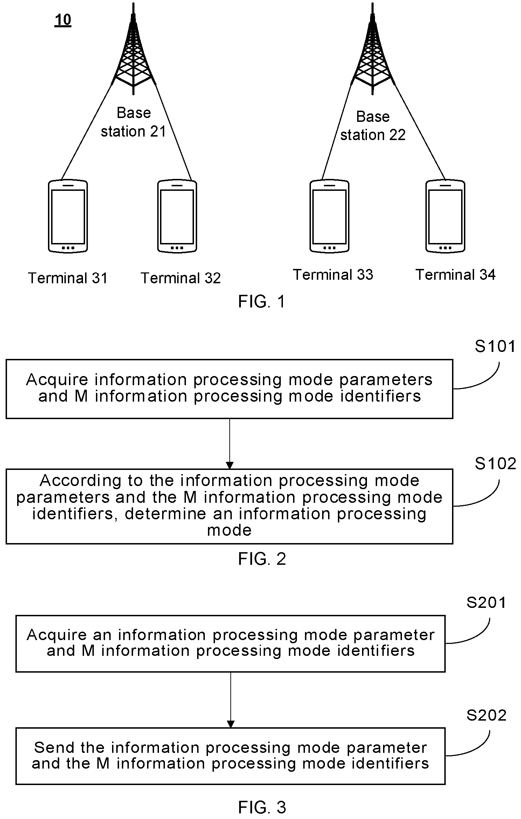

Exemplarily, taking the network-side device as a base station and the receiving-side device as a terminal as an example, FIG. 1 is a schematic diagram of an architecture of a communication system according to some embodiments. As shown in FIG. 1, the communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be in communication connection.

In some embodiments, a base station is configured to provide wireless access services to the plurality of terminals. A base station provides a service coverage area (also referred to as a cell). Terminals entering the area may communicate with the base station via wireless signals to receive wireless access services provided by the base station. There may be an overlap between service coverage areas of the base station 21 and the base station 22, and a terminal in the overlapped area may receive wireless signals from the plurality of base stations.

In some embodiments, a base station may be connected to the plurality of terminal devices, for example, the base station 21 is connected to the terminal 31 and the terminal 32. The terminal 31 and the terminal 32 may be located in a same cell, or the terminal 31 and the terminal 32 may be located in different cells. That is, a base station may provide network services to terminals in a cell, and may further provide network services to terminals in a plurality of cells at the same time.

In some embodiments, a base station may be a base station or an evolutional base station (e.g., an evolutional node B (eNB or eNodeB)) in long term evolution (LTE), long term evolution advanced (LTEA), a base station device in a 5G network, or a base station in a future communication system, etc. The base station may include various macro base stations, micro base stations, home base stations, wireless remote devices, reconfigurable intelligent surfaces (RISs), routers, wireless fidelity (WIFI) devices, or various network-side devices such as primary cells and secondary cells.

In some embodiments, a terminal may be a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal, sometimes, may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

In some embodiments, an indicator of a parameter may also be referred to as an index or an identifier (ID), and the concepts of indicator, identifier and index are equivalent. For example, a resource identifier of a wireless system may also be referred to as a resource indicator or a resource index. The resource identifier of the wireless system includes, but is not limited to one of the following: identifiers corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of a resource or a group of resources to the terminal through various high-layer signalings and/or physical-layer signalings. The terminal may feed back an identifier of a resource or a group of resources to the base station through various high-layer signalings and/or physical-layer signalings.

In some embodiments, a high-layer signaling includes, but is not limited to a radio resource control (RRC) signaling, a media access control control element (MAC CE) signaling, and other signalings besides the physical layer signalings, such as a LPP (LTE Positioning Protocol) high-layer signaling, a NRPPa (NR Positioning Protocol A) high-layer signaling, and a LPPa (LTE Positioning Protocol A) high-layer signaling, where the LPP is further applied to the NR positioning protocol. The physical-layer signaling may also be transmitted between the base station and the terminal, for example, the physical-layer signaling is transmitted on the physical downlink control channel (PDCCH), or the physical-layer signaling is transmitted on the physical uplink control channel (PUCCH).

In some embodiments, a slot may be a slot or a mini slot. A slot or a subslot includes at least one symbol. A symbol refers to a time unit for a subframe or a frame slot, such as an orthogonal frequency division multiplexing (OFDM) symbol, a single-carrier frequency division multiple access (SC-FDMA) symbol, or an orthogonal frequency division multiple access (OFDMA) symbol.

In some embodiments, a beam includes a transmitting beam, a receiving beam, a pair of a receiving beam and a transmitting beam and a pair of a transmitting beam and a receiving beam. In some embodiments, a beam may be understood as a kind of resource, for example, a reference signal resource, a transmitting end spatial filter, a receiving end spatial filter, a spatial filter, a spatial receiving parameter, a transmitting end precoding, a receiving end precoding, an antenna port, an antenna weight phasor, an antenna weight matrix, etc. A beam index may be replaced by a resource index (e.g., a reference signal resource index) because the beam may be bundled with some time-frequency code resources for transmission. A beam may also be a transmission (send/receive) mode; the transmission mode may include space division multiplexing, frequency domain/time domain diversity, beamforming, etc. In addition, the base station may perform quasi co-location (QCL) configuration for two reference signals, and inform a user end to describe a channel characteristic hypothesis. Parameters involved in the Quasi-co-location at least include: Doppler spread, Doppler shift, delay spread, average delay, average gain and spatial parameter (Spatial Rx parameter, or Spatial parameter); the spatial parameter may include spatial reception (Rx) parameters, angle information, spatial correlation of a receiving beam, an average delay, and correlation of time-frequency channel response (including phase information). The angle information may include at least one of the following: angle of arrival (AOA), angle of departure (AOD), zenith angle of departure (ZOD), and zenith angle of arrival (ZOA). The spatial domain filtering may be at least one of the following: a DFT phasor, a precoding phasor, a DFT matrix, a precoding matrix, or a phasor formed by a linear combination of multiple DFTs, or a phasor formed by a linear combination of multiple precoding phasors. In some embodiments, the concepts of phasor and vector are interchangeable. In some embodiments, a beam pair includes a combination of a transmitting beam and a receiving beam.

In some embodiments, a beam direction or a beam angle may include at least one of the following: angle of arrival (AOA), angle of departure (AOD), zenith angle of departure (ZOD), zenith angle of arrival (ZOA), a vector or a vector index constructed by at least one of AOA, AOD, ZOD, and ZOA, a discrete Fourier transform (DFT) phasor, a codeword in a codebook, a transmitting beam index, a receiving beam index, a transmitting beam group index, and a receiving beam group index.

In some embodiments, in order to calculate channel state information or perform channel estimation, mobility management, positioning, etc., a base station or a user needs to send a reference signal (RS). A reference signal includes, but is not limited to, a channel-state information reference signal (CSI-RS), a channel-state information-interference measurement (CSI-IM), sounding reference signal (SRS), synchronization signals block (SSB), and physical broadcast channel (PBCH). For example, the CSI-RS includes the following types: a zero power CSI-RS (ZP CSI-RS) and non-zero power CSI-RS (NZP CSI-RS). The NZP CSI-RS may be used to measure a channel or interference. The CSI-RS may also be used for tracking, which is referred to as a reference signal for tracking (e.g., a CSI-RS for Tracking (TRS)). The CSI-IM is generally used to measure interference. SRS is used for channel estimation. In addition, a resource element (Resource Element, RE) set included in time-frequency resources used to transmit reference signals is referred to as a reference signal resource, such as a CSI-RS resource, an SRS resource, a CSI-IM resource, and an SSB resource. In the description, an SSB includes a synchronization signal block and/or a physical broadcast channel.

In some embodiments, a resource for transmitting a reference signal may be referred to as a reference signal resource. In order to save signaling overhead, etc., multiple reference signal resources may be divided into multiple sets (such as CSI-RS resource sets, CSI-IM resource sets, SRS resource sets). A reference signal resource set includes at least one reference signal resource, and the multiple reference signal resource sets may all come from a same reference signal resource configuration (such as a CSI-RS resource setting, an SRS resource setting, a CSI-RS resource setting, where the CSI-IM resource setting may be merged with the CSI-IM resource setting, and both referred to as the CSI-RS resource setting) to configure parameter information.

In some embodiments, the base station configures reference signal measurement resource information, and the reference signal measurement resource information is used to acquire channel state information. The reference signal measurement resource information includes at least one piece of channel measurement resource (CMR) information and at least one piece of interference measurement resource (IMR) information. The base station configures the reference signal measurement resource information in a report configuration (report config) or a reporting setting. In some embodiments, a piece of channel measurement resource information includes at least one channel reference signal resource setting, such as at least one CSI-RS resource setting or at least one SRS resource setting, and a piece of interference measurement resource information includes at least one interference reference signal resource setting, such as at least one CSI-IM resource setting. In some embodiments, a piece of channel measurement resource information includes at least one channel reference signal resource set, such as at least one CSI-RS resource set or at least one SRS resource set, and a piece of interference measurement resource information includes at least one interference reference signal resource set, such as at least one CSI-IM resource set. In some embodiments, a piece of channel measurement resource information includes at least one channel reference signal resource, such as at least one CSI-RS resource or at least one SRS resource, and a piece of interference measurement resource information includes at least one interference reference signal resource, such as at least one CSI-IM resource.

In some embodiments, in order to better transmit data or signals, the base station or terminal needs to acquire measurement parameters or a processing result, and the measurement parameters or processing result may include channel state information or other parameters for characterizing the channel. The channel state information may include at least one of the following: channel state information-reference signal resource indicator (CSI-RS Resource Indicator, CRI), synchronization signal block resource indicator (Synchronization Signals Block Resource Indicator, SSBRI), layer 1 reference signal received power (L1 Reference Signal Received Power, L1-RSRP or RSRP), differential RSRP; layer 1 reference signal signal-to-interference noise ratio (e.g., L1 Signal-to-Interference Noise Ratio, L1-SINR or SINR), differential L1-SINR; reference signal received quality (RSRQ), channel quality indicator (CQI), precoding matrix indicator PMI), layer indicator (LI), rank indicator (RI), and precoding information. The precoding information includes first-type precoding information, such as codebook-based precoding information, where a precoding matrix indicator is one type of codebook-based precoding information. The precoding information further includes a mode based on non-codebook implementation, such as second-type precoding information.

In some embodiments, the terminal and the base station transmit channel state information that matches the channel through the first-type precoding information, and the first-type precoding information is precoding information based on a traditional channel characteristic matrix or a quantized value of the characteristic matrix. For example, the codebook-based method involves a N-antenna codebook in LTE (where N=2, 4, 8, 12, 16, 24, 32), the type I codebook, type II codebook, type II port selection codebook, enhanced type II codebook, enhanced type II selection codebook, and further enhanced type II selection codebook in NR.

The above-mentioned codebook includes L codewords. The main idea of the codebook is that the base station and the terminal save the L codewords in advance according to a mode of a prescribed formula or table or dictionary. In some embodiments, a codeword is a vector. In some embodiments, the codeword is a matrix, the matrix includes r columns, each column is also a vector. In some embodiments, columns of the matrix are mutually orthogonal with each other. In some embodiments, a vector constituting the codeword is a 0-1 vector, where only one value of the entire vector is 1 and the other values are zero. In some embodiments, the vector constituting the codeword is a DFT phasor. In some embodiments, the vector constituting the codeword is obtained by performing a Kronecker product on two or more DFT phasors. In some embodiments, the vector constituting the codeword is obtained by connecting two or more DFT phasors that are multiplies with different phases for rotation. In some embodiments, the vector constituting the codeword is obtained by performing a Kronecker product on two or more DFT vectors that multiplies with phases for rotation.

The terminal or base station finds the codeword that matches the channel best as an optimal codeword to transmit data or signals by searching from L codewords. Exemplarily, the codeword that matches the channel includes, but is not limited to at least one of the following: a codeword with the shortest distance from the channel, a codeword with the largest correlation between the channel, a codeword with the shortest distance between an optimal right singular vector or matrix of the codeword and an optimal right singular vector or matrix of the channel, a codeword with the largest correlation between an optimal right singular vector or matrix of the codeword and an optimal right singular vector or matrix of the channel, a codeword with the largest signal-to-noise ratio calculated with the channel, etc. L is an integer greater than 1, and is generally greater than a number of transmitting antennas.

In some embodiments, the terminal and the base station transmit channel state information that matches the channel through the second-type precoding information, and the second-type precoding information is channel state information obtained based on a model. In an embodiment, the base station and the terminal obtain channel state information through an encoder of an autoencoder, the autoencoder includes an encoder and a decoder, the encoder is at the terminal side, and the decoder is at the base station side. The terminal obtains compressed H1 by compressing obtained channel H through the encoder, quantizes the compressed H1 to feed back the quantized H1 to the base station; the base station receives the quantized H1 for dequantization, and inputs the dequantized H1 into the decoder, and uses the decoder to decompress the dequantized H1, thereby restoring H. In an embodiment, H includes K0 elements, the terminal selects K elements from H as H1, quantizes H1 and feeds back the quantized H1. The base station receives the K quantized elements and dequantizes them, inputs the dequantized K elements into a model, and uses the model to output K0 elements as the recovery of H, thereby obtaining a precoding matrix of H. K and K0 are integers greater than 1, and K<K0. Herein, the K elements selected from H or H1 passed through a compressor are all second-type precoding information. And for the sake of simplicity, the quantized H1 is also referred to as the second-type precoding information. In an embodiment, the second-type precoding information may also be a precoding matrix different from the first-type precoding information, which is generated by other non-model modes. In an embodiment, the second-type precoding information may also be a precoding matrix other than the first-type precoding information.

In some embodiments, beam parameter information is a layer 1 reference signal received power (L1 Reference Signal Received Power, L1-RSRP or RSRP), or a differential RSRP corresponding to at least one beam. In some embodiments, the beam parameter information is a layer 1 reference signal signal-to-interference noise ratio (e.g., L1 Signal-to-Interference Noise Ratio, L1-SINR or SINR), or a differential SINR corresponding to at least one beam. In some embodiments, the beam parameter information is a reference signal received quality (RSRQ) corresponding to at least one beam. In some embodiments, the beam parameter information is a beam angle (at least one of AOA, ZOA, AOD, ZOD, etc., sometimes also referred to as a horizontal angle of arrival, vertical angle of arrival, horizontal angle of departure, vertical angle of departure, etc., respectively) corresponding to at least one beam. In some embodiments, the beam parameter information is a transmitting beam index corresponding to at least one beam. In some embodiments, the beam parameter information is a receiving beam index corresponding to at least one beam. In some embodiments, the beam parameter information is a pair index of a transmitting beam and a receiving beam (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator (CSI-RS Resource Indicator, CRI) corresponding to at least one beam. In some embodiments, the beam parameter information is a synchronization signals block resource indicator (SSBRI) or other reference signal resource indicators (such as SRSRI (sounding reference signal resource indicator)) corresponding to at least one beam. In some embodiments, the beam parameter information is a combination of at least two of the following beam parameter information corresponding to at least one beam: RSRP, RSRQ, SINR, beam angle, transmitting beam index, receiving beam index, beam pair index, CRI, SSBRI, etc. In some embodiments, the beam parameter information is a linear value of one of RSRP, RSRQ, and SINR. In some embodiments, the beam parameter information is a logarithmic value or a decibel value (dB) of one of RSRP, RSRQ, and SINR.

In some embodiments, the beam parameter information is obtained based on CSI-RS measurements. In some embodiments, the beam parameter information is obtained based on SSB measurements. In some embodiments, the beam parameter information is obtained based on SRS measurements.

In some embodiments, the communication node may select an information processing mode to process obtained information (such as channel information, channel matrix information, time domain channel information, frequency domain channel information, angle information, position information), thereby an information processing result (referred to as a processing result for short) is obtained. The processing result includes one or more pieces of the channel state information, or one or more of the beam parameter information, or angle information, position information (such as coordinates), and position parameter information.

In some embodiments, the position parameter information includes, but is not limited to at least one of the following: a reference signal time difference (RSTD), relative time of arrival (RTOA), Angle of Arrival (AoA), Angle Of Departure (AOD), Rx-Tx time difference, Tx-Rx time difference, reference signal received power, and multipath information. The Rx-Tx time difference includes a Rx-Tx time difference on the base station side (e.g., a gNB Rx-Tx time difference) and a Rx-Tx time difference on the terminal side (e.g., a UE Rx-Tx time difference). When the angle information includes an azimuth angle and an angle of pitch, the angle of arrival includes the zenith angle of arrival (ZOA) and the azimuth angle of departure (AOD), the angle of departure includes the zenith angle of departure (ZOD) and the azimuth angle of departure (AOD), a number of paths is increased, a relative delay of the paths is increased, a power of the multipath is increased, a time domain response of the multipath is increased, and a real part and an imaginary part of the time domain response of the multipath are increased.

In some embodiments, the information processing mode may be an information processing mode based on traditional methods or various advanced information processing modes. The advanced information processing modes include, but are not limited to an information processing mode based on artificial intelligence (AI). AI is a device or component with self-learning capabilities, which may be implemented through software, modules, models, etc. AI may include the following types: machine learning (ML), deep learning, reinforcement learning, transfer learning, deep reinforcement learning, and meta-learning, etc. In some embodiments, information processing mode is implemented through an artificial intelligence network (also referred to as a neural network, or referred to as a neural network model, or a model).

A neural network includes an input layer, an output layer, and at least one hidden layer. Each layer of the neural network uses layer(s) including, but is not limited to at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block (or also referred to as resnet block), a dense network (e.g., a densenet block), a recurrent network (e.g., Recurrent Neural Network, RNN), etc. The artificial intelligence network may be implemented by a model, where the model may include a neural network model, where the neural network model includes a neural network model structure and/or neural network model parameters. The neural network model structure may be referred to as a model structure, and the neural network model parameters may be referred to as network parameters or model parameters. A model structure defines a network architecture, such as a layer number of neural network, a size of each layer, the activation function, a connection situation, a size of a convolution kernel and a convolution stride, a convolution type (such as 1D convolution, 2D convolution, 3D convolution, hollow convolution, transposed convolution, separable convolution, grouped convolution, extended convolution, etc.), while the network parameters are weights and/or biases and values of each layer in the neural network model. A model structure may correspond to multiple sets of values of different neural network model parameters to adapt to different scenarios. The neural network model parameters are obtained through online training or offline training. For example, by inputting at least one sample and a label, the neural network model is trained to obtain the neural network model parameters. In some embodiments, a sample includes N features and M labels, where N is a positive integer and M is an integer greater than or equal to 0. Multiple samples constitute a dataset.

In some embodiments, the model includes a neural network model, a non-AI model for processing channel information, and a function for mapping input information to output information. The above-mentioned mapping includes linear mapping and nonlinear mapping. In some embodiments, a model may have other names, such as a functional model, a function, a functional module, etc., which are not limited thereto.

In some embodiments, a model refers to a data flow between an original input of a sample and an output target passing through multiple linear or nonlinear components. The model includes a neural network model, a non-artificial intelligence module for processing information or corresponding model thereof, and a functional component or function for mapping input information to output information (the mapping herein includes linear mapping and nonlinear mapping). In some embodiments, each model corresponds to a model indicator (Model ID) or a model identity (Model ID). In some embodiments, the model identifier may also have one of the following other equivalent names or concepts: a model index, a function identifier, a model indicator, a function module identifier, etc.

In some embodiments, the model includes a model structure and model parameters. For example, the model is a neural network model, and the neural network model includes a neural network model structure and neural network model parameters, which are respectively used to describe the structure of the neural network and the parameter values of the neural network. A neural network model structure may correspond to multiple neural network model parameters, that is, neural network model structures may be the same, but corresponding neural network model parameter values may be different.

In some embodiments, an information processing mode corresponds to a model, for example, information is processed based on a model, and different models correspond to different information processing modes. In some embodiments, a model identifier may also be referred to as an information processing mode identifier, or a model identifier corresponds to or is associated with an information processing mode identifier. In some embodiments, for the information processing mode based on the traditional methods, an information processing mode identifier is a default specific value, such as 0, a fixed negative value, or a value outside a value range of the information processing mode identifier.

In some embodiments, in order to transmit a processing result (such as one or more pieces of channel state information, one or more beam measurement parameters, position information, time information, angle information, etc.), or a terminal feeds back the processing result, a base station receives the processing result, the terminal and the base station need to define a report, such as a CSI report (CSI report or CSI report congfig). The report defines at least one of the following parameters: a time-frequency resource for feeding back the processing result, a content included in the processing result (e.g., a report Quantity), a time domain category fed back by the processing result, a resource for measuring the channel, resources for measuring interference, a measured bandwidth size and other information. In an example, the processing result herein is CSI, or beam parameter information, etc.

The report may be transmitted on uplink transmission resources, where the uplink transmission resources include a physical uplink shared channel (PUSCH) and a PUCCH.

The report has time domain characteristics, and includes a periodic CSI report (P-CSI), aperiodic CSI report (AP-CSI), and semi-persistent CSI report (SP-CSI). Generally speaking, a number of bits transmitted by P-CSI is relatively small, and is transmitted on the PUCCH; a number of bits transmitted by A-CSI is relatively larger, and is generally transmitted on the PUSCH; the SP-CSI may be transmitted based on the PUSCH, or may also be transmitted based on the PUCCH. The P-CSI transmitted based on PUCCH is generally configured by a high-level signaling (e.g., Radio Resource Control (RRC)); the SP-CSI transmitted based on PUCCH is also configured or activated by the high-level signaling (e.g., RRC and/or MAC CE); the SP-CSI or A-CSI transmitted based on PUSCH are triggered by a physical layer signaling (e.g., DCI (downlink control information)). The DCI is generally transmitted on the physical downlink control channel (PDCCH).

In some embodiments, the channel information is information obtained according to a reference signal (such as CSI-RS) for describing a channel environment between communication nodes, such as a time domain channel matrix, a frequency domain channel matrix, channel state information corresponding to the time domain channel matrix or the frequency domain channel matrix, and angle information (including an azimuth angle, an angle of pitch, an angle of departure or an angle of arrival). In some embodiments, the time domain channel matrix and the frequency domain channel matrix are complex matrices, which are related to a number of transmitting antennas Nt, a number of receiving antennas Nr, and resource elements (RE). For example, there is at least one Nr*Nt channel matrix on a physical resource block. The base station transmits a reference signal for channel measurement in N slots. The terminal receives reference signals for channel measurement sent in the N slots, respectively and performs measurement in at least one slot. Channel information Hi (i=1, ..., N) of corresponding slots is obtained respectively according to the received reference signals for channel measurement sent in the N slots.

The information processing mode determination method provided in the embodiments of the present disclosure is applicable to a communication system including at least one first node and at least one second node. The following takes the first node as a terminal and the second node as a base station as an example to introduce the information processing mode determination method provided in the embodiments of the present disclosure.

As shown in FIG. 2, an information processing mode determination method is provided in some embodiments of the present disclosure, and is applied to a first node. The method includes the following S101-S102.

In S101, an information processing mode parameter and M information processing mode identifiers are acquired.

The information processing mode parameter at least includes a processing time threshold and/or information related to an operating task, and M is a positive integer. In some embodiments, the information processing mode parameter and the M information processing mode identifiers are used to determine an information processing mode.

In some embodiments, the first node acquires the M information processing mode identifiers and the information processing mode parameter by receiving a signaling (the signaling is a high-layer signaling and/or a physical layer signaling). In an embodiment, the M information processing mode identifiers and the information processing mode parameter are acquired by receiving a same signaling. In an embodiment, the first node acquires the M information processing mode identifiers and the information processing mode parameter by receiving two signalings respectively. In an embodiment, the first node acquires the M information processing mode identifiers by receiving a signaling, and the information processing mode parameter is acquired by an agreed mode or a default mode.

In some embodiments, the first node only acquires the M information processing mode identifiers, and in this case, the information processing mode parameter is a null value. In some embodiments, the information processing mode parameter acquired by the first node at least includes a processing time threshold. In some embodiments, the information processing mode parameter acquired by the first node at least includes the information related to the operating task. In some embodiments, the information processing mode parameter acquired by the first node at least includes the processing time threshold and the information related to the operating task. In some embodiments, the information processing mode parameter acquired by the first node includes a processing resource threshold. The processing resource threshold includes, but is not limited to, a threshold for one of processing time, power consumption, a computing resource, a storage resource, and a number of tasks. The information related to the operating task is information related to the first node operating a task. The information related to the operating task includes, but is not limited to one of the following: information processing mode identifiers corresponding to K information processing modes; and determination information that the first node uses the K information processing modes.

In some embodiments, an information processing mode identifier is used to indicate an information processing mode. The information processing mode identifier may also have one of the following other equivalent names or concepts, such as a model index, a function identifier, a model indicator (model ID), a model identity (model ID), etc.

In some embodiments, the information processing mode identifier includes a first identifier and a second identifier, that is, the information processing mode is indicated by a two-level identifier. The first identifier is used to indicate scene information, and the second identifier is used to indicate an information processing mode in a scene indicated by the first identifier.

In some embodiments, the information processing mode identifier may include a third identifier, that is, the information processing mode is indicated by an identifier. The third identifier is used to indicate an information processing mode.

In some embodiments, the information processing mode identifier may be global. For example, different information processing mode identifiers may be uniformly numbered. For example, there are a identifiers of information processing modes for implementing positioning, which are numbered from 1 to a, and there are b identifiers of information processing modes for implementing CSI feedback, which are numbered from a+1 to a+b. There are also information processing mode for implementing other functions, which are uniformly numbered according to agreed rules to obtain a global identifier for each information processing mode. The first node or the second node determines a corresponding information processing mode through the information processing mode identifier.

In an embodiment, the information processing mode and corresponding global identifier thereof are shared and used by base stations with the same type and/or terminals with the same type. In an embodiment, the information processing mode and corresponding global identifier thereof are shared and used by base stations and/or terminals in all areas. In an embodiment, the information processing mode and corresponding global identifier thereof are shared and used by base stations and/or terminals in a network in an area. In an embodiment, the information processing mode and corresponding global identifier thereof are shared and used by base stations and/or terminals in a cell. In an embodiment, the information processing mode and corresponding global identifier thereof are shared and used by base stations and/or terminals in a sector. In an embodiment, the information processing mode and corresponding global identifier thereof are shared and used by base stations and/or terminals covered by a group of beams.

In some embodiments, the information processing mode identifier is associated with at least one of: a function of the information processing mode, a network identifier, a cell identifier, a sector identifier, a precoding index, a port group index, an information processing type, a channel type, a reference signal resource identifier, a reference signal resource set identifier, and a reference signal type.

Exemplarily, taking the information processing mode identifier being associated with a function of an information processing mode as an example: there are a identifiers of information processing modes for implementing positioning, which are numbered from 1 to a; there are b identifiers of neural network information processing mode for implementing CSI feedback, which are numbered from 1 to b; and there also are identifiers of information processing modes for implementing other functions, which are numbered one by one from 1 to c according to the agreed rules, thus identifiers of information processing modes for different functions are obtained. The first node or the second node determines the corresponding information processing mode through the information processing mode identifier and a currently used information processing mode.

It should be understood that the information processing mode and a corresponding identifier associated with a function of the information processing mode may be used by base stations and/or terminals in different areas or levels (e.g., a cell level, a network level, or a specific type). In an embodiment, the information processing mode and its corresponding identifier associated with the function are shared and used by base stations with the same type and/or terminals with the same type. In an embodiment, the information processing mode and its corresponding identifier of the information processing mode are shared and used by base stations and/or terminals in all areas. In an embodiment, the information processing mode and its corresponding identifier associated with the function are shared and used by base stations and/or terminals in a network in an area. In an embodiment, the information processing mode and its corresponding identifier associated with the function are shared and used by base stations and/or terminals in a cell. In an embodiment, the information processing mode and its corresponding identifier associated with the function are shared and used by base stations and/or terminals in a sector. In an embodiment, the information processing mode and its corresponding identifier associated with the function are shared and used by base stations and/or terminals covered by a group of beams.

Exemplarily, taking an information processing mode identifier being associated with a reference signal type as an example: there are a identifiers of information processing modes for various functions related to CSI-RS, which are numbered from 1 to a; there are b identifiers of information processing modes for various functions related to SRS, which are numbered from 1 to b; and there are information processing mode identifiers associated with other reference signal types, which are numbered one by one according to the agreed rule, thus information processing mode identifiers bound to different reference signal types are obtained. The first node or the second node determines the corresponding information processing mode through an identifier associated with the reference signal type and corresponding to the information processing mode and a currently used reference signal type.

It should be understood that the information processing mode and its corresponding identifier associated with a reference signal type may be used by base stations and/or terminals in different areas or levels (e.g., a cell level, a network level, or a specific type). In an embodiment, the information processing mode and its corresponding identifier associated with the reference signal type are shared and used by base stations with the same type and/or terminals with the same type. In an embodiment, the information processing mode and its corresponding identifier associated with the reference signal type are shared and used by base stations and/or terminals in all areas. In an embodiment, the information processing mode and its corresponding identifier associated with the reference signal type are shared and used by base stations and/or terminals in a network in an area. In an embodiment, the information processing mode and its corresponding identifier associated with the reference signal type are shared and used by base stations and/or terminals in a cell. In an embodiment, the information processing mode and its corresponding identifier associated with the reference signal type are shared and used by base stations and/or terminals in a sector. In an embodiment, the information processing mode and its corresponding identifier associated with the reference signal type are shared and used by base stations and/or terminals covered by a group of beams.

Exemplarily, taking an information processing mode identifier being associated with a channel type as an example: there are a identifiers of information processing modes for various functions related to PUSCH, which are numbered from 1 to a; there are b identifiers of information processing modes for various functions related to PUCCH, which are numbered from 1 to b; and there are information processing mode identifiers associated with other channel types, which are numbered one by one according to the agreed rule, thus information processing mode identifiers bound to different channel types are obtained. The first node or the second node determines the corresponding information processing mode through an identifier associated with the channel type and corresponding to the information processing mode and a currently used channel type.

It should be understood that the information processing mode and its corresponding identifier associated with a channel type may be used by base stations and/or terminals in different areas or levels (e.g., a cell level, a network level, or a specific type). In an embodiment, the information processing mode and its corresponding identifier associated with the channel type are shared and used by base stations with the same type and/or terminals with the same type. In an embodiment, the information processing mode and its corresponding identifier associated with the channel type are shared and used by base stations and/or terminals in all areas. In an embodiment, the information processing mode and its corresponding identifier associated with the channel type are shared and used by base stations and/or terminals in a network in an area. In an embodiment, the information processing mode and its corresponding identifier associated with the channel type are shared and used by base stations and/or terminals in a cell. In an embodiment, the information processing mode and its corresponding identifier associated with the channel type are shared and used by base stations and/or terminals in a sector. In an embodiment, the information processing mode and its corresponding identifier associated with the channel type are shared and used by base stations and/or terminals covered by a group of beams.

In some embodiments, the information processing mode identifier is absolute. For example, a maximum value of the information processing mode identifier is A, where A is a positive integer greater than 1. In this case, the information processing mode identifier transmitted in the high-layer signaling or physical layer signaling may take any value from 1 to A.

In some embodiments, the information processing mode identifier is relative. For example, the maximum value of the information processing mode identifier is A. In this way, identifiers of A information processing modes and related parameter descriptions are configured by an RRC signaling. B information processing modes are selected and activated from the A information processing modes using an MAC CE, where B is a positive integer less than A. Afterwards, identifiers of C information processing modes are transmitted through a physical layer signaling, and the above-mentioned C information processing modes belong to the activated B information processing modes. C is a positive integer less than B. In the RRC signaling, A information processing mode identifiers is numbered from 1 to A (or from 0 to A-1). In the MAC CE, the identifiers of the activated B information processing modes may be renumbered from 1 to B (or 0 to B-1). In the physical layer signaling, the identifiers of the C information processing modes may be renumbered from 1 to C (or 0 to C-1). It can be understood that, in MAC CE or physical layer signaling, the information processing mode identifier is a corresponding identifier.

In the embodiments of the present disclosure, the information processing mode includes a first information processing mode or a second information processing mode. The first information processing mode is a model-based information processing mode. The second information processing mode is a non-model-based information processing mode, or a traditional information processing mode.

In some embodiments, the first information processing mode may be classified as a first information processing mode based on a first model and a first information processing mode based on a second model according to a used model.

In an embodiment, the first model may include at least one of the following: a model recommended by the second node, an updated model, a model determined by the second node to be suitable for a current scene/channel environment, a model recommended by the first node, and a model determined by the first node to be suitable for the current channel or scene.

In an embodiment, the second model may include at least one of the following: an original model of the first node, a model activated by the second node at a historical moment, a default model between the first node and the second node, or a model agreed between the first node and the second node.

In some embodiments, after the first node accesses the second node, as a position of the first node changes (for example, the first node moves or rotates) or the surrounding environment changes, the channel environment changes, and the information processing mode needs to be updated to adapt to a new scene. The first node acquires the information processing mode parameter and the M information processing mode identifiers, and determines the information processing mode suitable for the current scene/channel environment according to the information processing mode parameter and the M information processing mode identifiers based on a manner of direct measurement or indirect measurement.

In an embodiment, M information processing modes corresponding to the M information processing mode identifiers are determined from N information processing modes supported by the first node, and thus the M information processing modes corresponding to the M information processing mode identifiers belong to the information processing modes supported by the first node, and N is a positive integer greater than 1. For example, the first node sends the N supported information processing modes and/or information processing mode identifiers corresponding to the N information processing modes to the second node. The second node acquires the N information processing modes by receiving the N information processing modes and/or information processing mode identifiers corresponding to the N information processing modes.

In an embodiment, the M information processing modes corresponding to the M information processing mode identifiers are determined from all information processing modes, so the M information processing modes corresponding to the M information processing mode identifiers may belong to the information processing modes supported by the first node, or may not belong to the information processing modes supported by the first node. It should be noted that, in a case where an information processing mode corresponding to an information processing mode identifier does not belong to the information processing modes supported by the first node, if the first node decides to use the information processing mode corresponding to the information processing mode identifier, the first node may download the information processing mode corresponding to the information processing mode identifier from a management server for information processing modes.

In some embodiments, the information processing mode parameter and the M information processing mode identifiers may be carried in a high-layer signaling and/or a physical layer signaling. For example, the second node transmits the information processing mode parameter and the M information processing mode identifiers through channel state information report configuration signaling; correspondingly, the first node receives the information processing mode parameter and the M information processing mode identifiers through the channel state information report configuration signaling.

In some embodiments, the information processing mode parameter and the M information processing mode identifiers may be carried in a same high-level signaling and/or physical layer signaling; correspondingly, the first node acquires the information processing mode parameter and the M information processing mode identifiers through the same high-level signaling and/or physical layer signaling.

In some embodiments, the information processing mode parameter and the M information processing mode identifiers may be respectively carried in two different high-level signalings and/or physical layer signalings; correspondingly, the first node acquires the information processing mode parameter and the M information processing mode identifiers through the two different high-level signalings and/or physical layer signalings.

In some embodiments, the M information processing mode identifiers may be carried in a high-level signaling and/or a physical layer signaling, and the information processing mode parameter is transmitted in an agreed mode or a default mode (i.e., a pre-agreed mode or a default mode between the first node and the second node); correspondingly, the first node acquires the M information processing mode identifiers through the high-level signaling and/or physical layer signaling, and acquires the information processing mode parameter in the agreed mode or the default mode.

In S102, an information processing mode is determined according to the information processing mode parameter and the M information processing mode identifiers.

In an embodiment, the first node may determine the first information processing mode based on the second model as the information processing mode according to the information processing mode parameter and the M information processing mode identifiers. That is, the first node and the second node may agree that after the first node acquires the information processing mode parameter and the M information processing mode identifiers, the default information processing mode is the first information processing mode based on the second model.

In an embodiment, after the first node acquires the information processing mode parameter and the M information processing mode identifiers, the first node needs to determine whether M information processing modes indicated by the M information processing mode identifiers meet a preset condition. In a case where there is an information processing mode that meets the preset condition, the first node determines the first information processing mode based on the first model as the information processing mode. In the case where there is no information processing mode that meets the preset condition, the first node determines a default information processing mode as the information processing mode.

In an embodiment, the default information processing mode may be a second information processing mode (i.e., the traditional information processing mode). As another example, the default information processing mode is the first information processing mode based on the second model.

Exemplarily, the preset condition includes, but is not limited to at least one of the following:
condition 1: the M information processing modes corresponding to the M information processing mode identifiers belong to the information processing modes supported by the first node.
condition 2: a first processing time is less than or equal to the processing time threshold.
condition 3: performance of the first model is better than performance of the second model.

For example, performance of a model may be characterized by time for the model to process information. Based on this, the performance of the first model being better than the performance of the second model may be represented as: a first processing time is less than or equal to a second processing time. The above-mentioned first processing time is time of the first model processing information. The second processing time is time for the second model to process information.

In some embodiments, the first node may determine the processing time threshold according to one of the following modes:
the information processing mode parameter includes the processing time threshold, thus the processing time threshold is acquired according to the information processing mode parameter;
the processing time threshold is pre-configured or agreed;
configuration information of the processing time threshold is received, and the processing time threshold is acquired according to the configuration information of the processing time threshold.

In the above-mentioned embodiments, the information processing mode is determined from the perspective of the model. In some embodiments, the first node may further determine the information processing mode according to the information processing mode parameter and the M information processing mode identifiers.

In some embodiments, an information processing mode identifier corresponds to an information processing mode, and an information processing mode corresponds to a period of processing time, that is, the M information processing mode identifiers correspond to M periods of processing time. The first node determining the information processing mode according to the information processing mode parameter and the M information processing mode identifiers may include the following implementation modes.

Mode 1: The first node selects an information processing mode from the M information processing mode identifiers, and then determines an information processing mode indicated by the information processing mode identifier that is selected as the information processing mode.

In some embodiments, the information processing mode parameter may be an empty set (null). In a case where the information processing mode parameter is null, the first node selects an information processing mode identifier from the M information processing mode identifiers. Then, an information processing mode indicated by the information processing mode identifier that is selected is designated as the determined information processing mode. The selected information processing mode identifier may be an information processing mode identifier with a minimum index among the M information processing mode identifiers, or an information processing mode identifier corresponding to an information processing mode with the shortest processing time among the M periods of processing time, or an identifier of an information processing mode corresponding to the best processing result among the M information processing modes. In a case where M is 1, the selected information processing mode identifier is an information processing mode identifier included in information processing mode indication information.

That is to say, in a case where the information processing mode parameter is null, after the first node acquires the information processing mode parameter and M information processing mode identifiers, the first node selects an information processing mode identifier from the M information processing mode identifiers, and then determines that the information processing mode is an information processing mode corresponding to the information processing mode identifier.

Mode 2: The first node determines K information processing modes according to the processing time threshold and M periods of processing time; processing time corresponding to each information processing mode among the K information processing modes is less than and/or equal to the processing time threshold, K is a positive integer less than M, and preferably, K is 1.

That is, the first node selects the K information processing modes whose corresponding processing time are less than and/or equal to the processing time threshold from the M periods of processing time according to the M periods of processing time corresponding to the M information processing mode identifiers and the processing time threshold.

In some embodiments, K periods of processing time corresponding to the K information processing modes may be, but are not limited to, one of the following: the shortest K periods of processing time among the M periods of processing time, and the K periods of processing time corresponding to the K information processing modes among information processing modes that meet the performance requirement of the M information processing modes.

Processing time corresponding to an information processing mode includes, but is not limited to one of the following:
time from a moment of transmitting one or more reference signal resources (such as one or more CSI-RS resources, one or more CSI-IM resources, one or more NZP CSI-RS resources for measuring interference or channel) to a moment of obtaining a processing result by processing information through the information processing mode, where the information is acquired according to the reference signal resources, and the moment of transmitting the reference signal is a moment corresponding to an earliest symbol for transmitting the one or more reference signal resources, and transmission includes the sending of the second node or the reception of the first node;
time from a moment of acquiring the information to a moment of obtaining the processing result by processing the information through the information processing mode;
time from a moment of starting to process the information through the information processing mode to a moment of obtaining the processing result.

In some embodiments, after the first node determines the K information processing modes, the first node sends information related to the K information processing modes; correspondingly, the second node receives the information related to the K information processing modes.

In an embodiment, the information related to the K information processing modes includes K information processing mode identifiers corresponding to the K information processing modes.

In an embodiment, the information related to the K information processing modes is confirmation information confirming usage of the K information processing modes to perform information processing. After the second node receives the information related to the K information processing modes, the second node determines that information processing modes selected by the first node are the K information processing modes.

Mode 3: In a case where the M periods of processing time corresponding to the M information processing mode identifiers are all greater than and/or equal to the processing time threshold, the first node determines a default information processing mode as the information processing mode. The default information processing mode includes one of the following:
an information processing mode corresponding a default information processing mode identifier;
an information processing mode corresponding to a negotiated information processing mode identifier;
an information processing mode corresponding to an original information processing mode identifier; or
a traditional information processing mode or a second information processing mode.

An original information processing mod also has other names in some embodiments, such as a historical information processing mode, a previous information processing mode, an existing information processing mode, or a former information processing mode.

In some embodiments, in a case where the M periods of processing time corresponding to the M information processing mode identifiers are all greater than and/or equal to the processing time threshold, or in a case where L periods of processing time in the M periods of processing time corresponding to the M information processing mode identifiers are greater than and/or equal to the processing time threshold (M-L is greater than or equal to K), or in a case where L information processing modes among the M information processing modes are operated, processing resources do not meet a requirement, etc., where M, L, and K are all positive integers, the method may further include at least one of the following situations.

Situation 1: the first node sends information related to a processing resource to the second node; correspondingly, the second node receives the information related to the processing resource.

It should be noted that, since processing resources of the first node are limited, in a case where the first node uses the M information processing modes indicated by the second node, the first node may face a problem that remaining processing resources are insufficient to use the M information processing modes. Therefore, in a case where the M periods of processing time corresponding to the M information processing mode identifiers are all greater than and/or equal to the processing time threshold, the first node may send the information related to the processing resource to the second node.

The above-mentioned processing resources are resources for operating the information processing mode, and the information related to the processing resource (first processing resource related information) includes at least one of the following: recommended processing time, a power consumption, a computing resource, a storage resource, a number of tasks, a processing resource not meeting a requirement, and a remaining processing resource not meeting a requirement.

It should be understood that after the second node receives the information related to the processing resource, the second node may learn a reason why the first node refuses to use the M information processing modes corresponding to the M information processing mode identifiers. Furthermore, the second node may re-determine M new information processing mode identifiers that meet the requirement of the first node according to the reason, and re-send the M new information processing mode identifiers to the first node, so that the first node may adopt the M information processing modes corresponding to the M new information processing mode identifiers recommended by the second node.

In some embodiments, in order to avoid the first node having insufficient processing resources to use the M information processing modes corresponding to the M information processing mode identifiers recommended by the second node, before the first node acquires the information processing mode parameter and the M information processing mode identifiers, the first node may send second processing resource information to the second node, where second processing resource related information includes at least one of the following: at least one of recommended processing time, a computing resource, a storage resource, a number of tasks; correspondingly, the second node receives the second processing resource information.

After the second node receives the second processing resource information, the second node may determine the information processing mode parameter and the M information processing mode identifiers suitable for the first node according to the second processing resource information, and send the information processing mode parameter and the M information processing mode identifiers determined to be suitable for the first node, so that M information processing modes corresponding to the M information processing mode identifiers may meet processing resource requirements of the first node.

Situation 2: the first node sends information related to an operating task of the first node; correspondingly, the second node receives the information related to the operating task of the first node.

It can be understood that in a case where the M periods of processing time corresponding to the M information processing mode identifiers are all greater than and/or equal to the processing time threshold, or in a case where L periods of processing time in the M periods of processing time corresponding to the M information processing mode identifiers are greater than and/or equal to the processing time threshold (M-L is greater than or equal to K), or in a case where L information processing modes among the M information processing modes are operated, processing resources do not meet a requirement, etc., where M, L, and K are all positive integers, the first node determines that the K information processing modes corresponding to the M information processing mode identifiers may not be used to perform information processing. The first node may send information related to the operating task of the first node to the second node, so that the second node may determine a currently operating task of the first node according to the information related to the operating task of the first node.

In an embodiment, the operating task of the first node may be an information processing operation corresponding to the information processing mode, such as an operation of acquiring CSI, an operation of beam prediction, an operation of CSI prediction, and an operation of acquiring positioning information according to the information, or as another example, information processing performed according to an information processing mode corresponding to a new information processing mode identifier, information processing performed according to an information processing mode corresponding to an original/default/negotiated information processing mode identifier, and information processing performed according to a traditional non-AI information processing mode.

In some embodiments, the information related to the operating task of the first node at least includes information related to a task recommended to be closed. The information related to the task recommended to be closed may be an identifier of the task recommended to be closed, or may be a name of the task recommended to be closed. That is, the information related to the operating task of the first node, which is sent from the first node to the second node, not only indicates the currently operating task of the first node, but also indicates the task that the first node recommends to close.

It should be understood from the above-mentioned description, since processing resources of the first node are limited, in a case where the first node uses the M information processing modes indicated by the second node, the first node may face a problem that remaining processing resources are insufficient to use the M information processing modes. Therefore, in a case where all or a portion of the M periods of processing time corresponding to the M information processing mode identifiers are greater than and/or equal to the processing time threshold, the first node sends the information related to the operating task of the first node to the second node to request the second node to allow the first node to close unimportant tasks or models to release corresponding processing resources, thus to support the usage of the M information processing modes corresponding to the M information processing mode identifiers.

In an embodiment, after the second node receives the information related to the operating task of the first node, the second node also sends a task closing enable identifier to the first node; correspondingly, the first node receives the task closing enable identifier.

In some embodiments, after the second node receives the information related to the operating task of the first node, the second node may determine whether to allow to close corresponding tasks and/or models according to the information related to the operating task of the first node and service requirements between the second node and the first node. Afterwards, the second node may send the task closing enable identifier.

In an embodiment, a case of the task closing enable identifier taking a first value represents that the second node determines that a processing capacity of the first node cannot meet a requirement according to the information related to the operating task of the first node, and the second node agrees to close a task corresponding to the information related to the task recommended to be closed. Then, after the first node receives the task closing enable identifier, the first node closes the task corresponding to the information related to the task recommended to be closed.

In some embodiments, after the first node closes the task corresponding to the information related to the task recommended to be closed, the first node sends feedback information to the second node, where the feedback information includes an identifier of the closed task. Accordingly, the second node receives the feedback information, and determines the task that has been closed by the first node according to the identifier of the closed task included in the feedback information.

In an embodiment, a case of the task closing enable identifier taking a second value represents that the second node determines that the processing capacity of the first node can meet the requirement according to the information related to the operating task of the first node, and the second node indicates the first node to refuse to close the task corresponding to the information related to the task recommended to be closed. Then, after the first node receives the task closing enable identifier, the first node refuses to close the task corresponding to the information related to the task recommended to be closed.

The above embodiments are illustrated by taking the example that the information processing mode parameter includes the processing time threshold. In some embodiments, the information processing mode parameter may further include the information related to the operating task of the first node. The information related to the operating task of the first node at least includes the information related to the task recommended to be closed.

That is to say, the information processing mode parameter and the M information processing mode identifiers sent from the second node to the first node not only indicate the first node to use the M information processing modes corresponding to the M information processing mode identifiers to perform information processing, but also indicate the tasks that are recommended to be closed by the first node.

In some embodiments, in a case where the information processing mode parameter further includes the information related to the operating task of the first node, after the first node determines the information processing mode, if the first node determines, according to its own processing resources or operating situations, to refuse to close all or a portion of tasks corresponding to the information related to the task recommended to be closed indicated by the second node, the first node may further send negative information to the second node; correspondingly, the second node receives the negative information. The negative information is used to represent that the all or a portion of tasks among the tasks recommended to be closed are refused to be closed. Furthermore, the second node learns, according to the negative information, that the first node refuses to close all or a portion of the tasks among the tasks recommended to be closed.

In some embodiments, in a case where the second node learns that the first node refuses to close all or a portion of the tasks among the tasks recommended to be closed, the second node may re-send information related new tasks recommended to be closed to the first node, so that the first node may close all or a portion of tasks among the new tasks recommended to be closed by the second node.

In some embodiments, if the first node determines, according to its own processing resources or operating situations, to agree to close all or a portion of the tasks among the tasks recommended to be closed as indicated by the second node, the first node may further send confirmation information to the second node; correspondingly, the second node receives the confirmation information. The confirmation information is used to indicate that the all or a portion of tasks among the tasks recommended to be closed are agreed to be closed. Furthermore, the second node learns, according to the confirmation information, that the first node agrees to close all or a portion of the tasks corresponding to the information related to the task recommended to be closed.

In some embodiments, the confirmation information may further include information related to closed tasks, so that the second node may determine which tasks have been closed by the first node according to the information related to the closed tasks. The information related to the closed tasks includes identifiers of the closed tasks.

Based on the embodiment shown in FIG. 2, the first node may determine a suitable information processing mode according to the information processing mode parameter and the M information processing mode identifiers to ensure information processing performance, thereby ensuring communication performance of the wireless communication system.

As shown in FIG. 3, an information sending method is further provided in the embodiments of the present disclosure, which is applied to a second node. The method includes the following S201-S202.

In S201, an information processing mode parameter and M information processing mode identifiers are acquired.

The information processing mode parameter and the M information processing mode identifiers are used to determine an information processing mode. That is, the information processing mode parameter and the M information processing mode identifiers may be used to trigger or activate the first node to re-determine the information processing mode.

Relevant introduction for the information processing mode parameter and the M information processing mode identifiers may refer to the introduction of the relevant contents in the embodiments shown in FIG. 2, which may not be repeated herein.

In S202, the information processing mode parameter and the M information processing mode identifiers are sent.

A signaling interaction process between the second node and the first node before or after the second node sends the information processing mode parameter and the M information processing mode identifiers may also refer to the introduction of the relevant contents in the embodiments shown in FIG. 2, which may not be repeated herein.

Based on the embodiments shown in FIG. 3, the second node triggers the first node to re-determine the information processing mode by sending the information processing mode parameter and the M information processing mode identifiers. Therefore, the first node may process information by adopting an information processing mode that is more suitable for a current scene, thereby ensuring information processing performance, and thus ensuring communication performance of the wireless communication system.

The following takes the first node as a terminal and the second node as a base station as an example, and takes the information processing mode as a model-based artificial intelligence and a traditional information processing mode as examples, and takes the information processing mode identifier as a model identifier as an example. The embodiments shown in FIG. 2 and FIG. 3 are described by way of examples.

### Example 1:

The base station, for example, configures a channel state information report configuration through a high-level signaling, where the CSI report configuration includes a model identifier. The terminal receives the high-layer signaling, thereby acquiring the model identifier. Furthermore, a capability of the terminal supports a model corresponding to the model identifier to perform processing on channel information. Therefore, the terminal adopts the model corresponding to the model identifier to perform processing on the channel information.

### Example 2:

The base station, for example, configures a channel state information report configuration through a high-level signaling, where the CSI report configuration includes a model identifier. The terminal receives the high-layer signaling, thereby acquiring the model identifier. However, the capability of the terminal does not support to perform processing on channel information by using a model corresponding to the model identifier. Alternatively, performance of the terminal using the model corresponding to the model identifier to process channel information is not as good as the performance of processing the channel information using an original model, or is not as good as the performance of processing the channel information based on the traditional information processing mode. Therefore, the terminal may process the channel information by adopting a default mode. In an embodiment, the terminal falls back to use a second information processing mode (i.e., the traditional information processing mode) to process the channel information. In an embodiment, the terminal uses the original model to process the channel information. In an embodiment, the terminal acquires a model suitable for the current scene, and feeds back a model identifier and/or model description information of the model to the base station.

### Example 3:

The base station, for example, configures a channel state information report configuration through a high-level signaling, where the CSI report configuration includes a model identifier. In an embodiment, the CSI report configuration includes a processing time threshold T. In an embodiment, the base station also transmits the processing time threshold T through other high-layer signalings and/or physical-layer signalings.

After the terminal acquires the model identifier and the processing time threshold T, the terminal may determine a length relationship between time T1 of a model corresponding to the model identifier processing channel information and T.

In an embodiment, T1 is less than or equal to T, and then the terminal processes the channel information according to the model corresponding to the acquired model identifier. Optionally, the terminal may further send confirmation information to the base station, so that the base station learns that the terminal adopts the model corresponding to the acquired model identifier to process the channel information.

In an embodiment, T1 is greater than T, and the terminal processes the channel information by using a default mode. In an embodiment, the terminal may further send a negative information to the base station, so that the base station learns that the terminal does not support to process the channel information by using the model activated by the base station.

### Example 4:

The base station, for example, configures a channel state information report configuration through a high-level signaling, where the CSI report configuration includes a model identifier. The terminal receives the high-layer signaling, thereby acquiring the model identifier. The terminal determines whether to accept a model activated by the base station according to the model identifier and own situations of the terminal.

In an embodiment, the terminal determines to accept the model activated by the base station, and then the terminal adopts the model corresponding to the model identifier to process the channel. In an embodiment, the terminal may further send confirmation information to the base station, so that the base station learns that the terminal adopts the model activated by the base station to process the channel information.

In an embodiment, if the terminal determines that the model activated by the base station is disagreed, the terminal does not adopt the model corresponding to the model identifier to process the channel, but uses a default mode to process the channel information. In an embodiment, the terminal may further send a negative information to the base station, so that the base station learns that the terminal does not support to process the channel information by using the model activated by the base station.

In an embodiment, the terminal feeds back a reason why the model recommended by the base station is not supported, codes corresponding to the reason, or a serial number corresponding to the reason. The reason why the model recommended by the base station is not supported includes, but are not limited to one of the following: inference time of the terminal not meeting a requirement, a power consumption of the terminal after using the new model not meeting a requirement, computing power of the terminal not meeting a requirement, a storage capacity of the terminal not meeting a requirement, and resources currently available to the terminal not meeting a requirement. After the base station receives the reason fed back by the terminal why the model recommended by the base station is not supported, the base station recommends a new model that meets requirements of the terminal to the terminal according to the reason.

### Example 5:

The base station, for example, configures a channel state information report configuration through a high-level signaling, where the CSI report configuration includes a model identifier. The terminal receives the high-layer signaling, thereby acquiring the model identifier. The terminal determines whether to accept a model activated by the base station according to the model identifier and own situations of the terminal.

In an embodiment, the terminal determines to accept the model activated by the base station, but remaining computing resources or computing power of the terminal is insufficient to support channel information processing corresponding to the new model. The terminal needs to close an existing task of the model. The terminal feeds back a model identifier or a task identifier of the task recommended to be closed. In an embodiment, the base station receives the model identifier or task identifier recommended to be closed fed back by the terminal. The base station sends a closing instruction to the terminal, where the closing instruction is used to indicate the terminal to close one or more of recommended tasks, a list of closed tasks, or a model corresponding to the task. After the terminal receives the closing instruction sent from the base station, the terminal close the task indicated by the instruction, and performs channel information processing by using the model corresponding to the model identifier activated by the base station.

In an embodiment, the base station receives an identifier of a closed model or task fed back by the terminal. The base station sends a closing instruction to the terminal, where the closing instruction is used to close one or more of the recommended tasks, or a list of closed tasks. In addition, the base station configures an identifier of an activated model in the report. After the base station receives the instruction for closing tasks and report sent from the base station, the terminal stops the task indicated by the closing instruction, and processes the channel information by using a model determined based on the model identifier or model identifier list configured in the report.

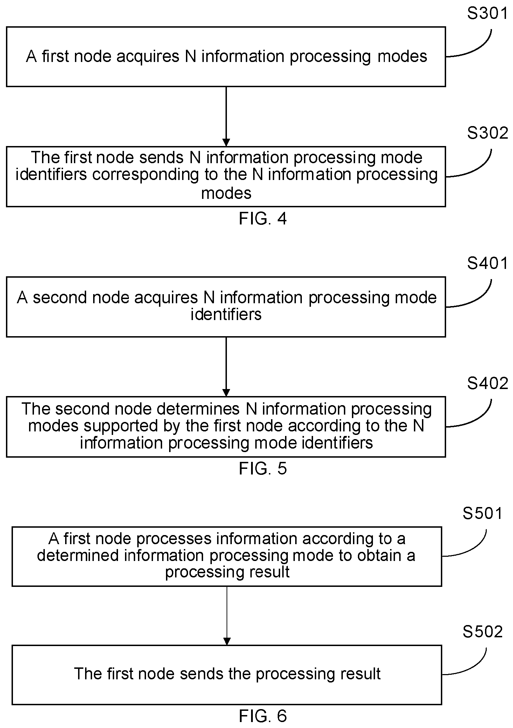

As shown in FIG. 4, an information sending method is provided in the embodiments of the present disclosure, and the method is applied to a first node. The method includes the following S301-S302.

S301, the first node acquires N information processing modes.

In some embodiments, the first node may acquire an information processing mode from its own database.

In some embodiments, the first node may download an information processing mode from a management server of information processing modes. The above-mentioned management server of the information processing modes may be a network element used to manage the information processing modes in the core network, a third-party server in the external network, or a base station used to manage the information processing modes in the access network, which is not limited herein.

In S302, the first node sends N information processing mode identifiers corresponding to the N information processing modes.

In an embodiment, the first node transmits the N information processing mode identifiers through a high-level signaling and/or physical-layer signaling; correspondingly, the second node receives the N information processing mode identifiers through the high-level signaling and/or physical layer signaling. For example, the first node sends capability information to the second node, where the capability information includes the N information processing mode identifiers.

In some embodiments, in a case where the first node is in an initial access stage, or in a case where the first node moves into a new cell, the first node may feed back the N information processing mode identifiers to the second node, so that the second node learns the N information processing modes supported by the first node.

Based on the embodiments shown in FIG. 4, the first node feeds back the N information processing mode identifiers corresponding to the N information processing modes supported by the first node itself to the second node. Therefore, the second node may learn the N information processing modes supported by the first node based on the N information processing mode identifiers. That is, a consistent understanding for the information processing modes supported by the first node between the first node and the second node is implemented, so that the second node and the first node may negotiate to use one or more information processing modes among the N information processing modes. For example, in a case where a channel environment changes, since the first node and the second node have the consistent understanding for the information processing modes supported by the first node, the first node and the second node may negotiate an information processing mode suitable for a current channel environment through an information processing mode update process (such as the embodiments shown in FIG. 2 or FIG. 3), so that the channel information may be processed by using an information processing mode suitable for the current channel environment, to ensure the processing performance of the channel information. Based on this, accurate channel information can be acquired between the first node and the second node to ensure the transmission performance between the first node and the second node.

As shown in FIG. 5, an information processing mode determination method is provided in the embodiments of the present disclosure, which is applied to a second node. The method includes the following S401-S402.

In S401, the second node acquires N information processing mode identifiers.

Each information processing mode identifier among the N information processing mode identifiers is used to indicate an information processing mode supported by a first node.

In an embodiment, the second node receives N information processing mode identifiers sent from the first node.

In an embodiment, the second node may acquire the N information processing mode identifiers from other devices other than the first node (e.g., a model management server).

In S402, the second node determines N information processing modes supported by the first node according to the N information processing mode identifiers.

In some embodiments, the second node may acquire configuration information of an information processing mode to support the first node to use a corresponding information processing mode according to the configuration information. The configuration information of the information processing mode may include structure information and/or parameter information. The structural information is used to indicate a structure of the information processing mode, and the parameter information is used to indicate parameter values of parameters in the information processing mode.

Taking the information processing mode as a neural network model as an example, the structural information of the information processing mode is used to describe the structure of the neural network model, such as a number of hidden layers included in the neural network model, types of various hidden layers and connection relationships among various hidden layers, etc., which are not limited herein. The parameter information of the information processing mode is used to describe model parameters of the neural network model, such as a weight and/or bias of each layer in the neural network model, which are not limited herein. It should be understood that a structure of a neural network model may correspond to multiple different model parameters. Different model parameters being combined with the structure of a same neural network model may constitute different neural network models.

Exemplarily, the second node may adopt any one of the following modes to acquire the configuration information of the information processing mode.

Mode 1: the first node transmits the configuration information of the information processing mode. Correspondingly, the second node acquires the configuration information of the information processing mode from the first node.

For example, after the first node accesses the network, the first node may download information related to an information processing mode (e.g., including configuration information of the information processing mode) from the management server of information processing modes through the second node. In the case where the information related to the information processing mode is transparently transmitted between the first node and the management server, the second node cannot perceive specific contents of the information related to the information processing mode. Therefore, after the first node acquires the information related to the information processing mode, the first node may send the configuration information of the information processing mode to the second node.

Mode 2: the second node acquires configuration information of the information processing mode from the management server of the information processing modes.

For example, after the first node accesses the network, the first node may download information related to an information processing mode (e.g., including configuration information of the information processing mode) from the management server of information processing modes through the second node. In a case where the information related to the information processing mode is transmitted non-transparently between the first node and the management server, the second node may perceive the specific contents of the information related to the information processing mode, i.e., the second node may acquire the configuration information of the information processing mode from the management server.

As another example, the management server of the information processing modes may send the information related to the information processing mode downloaded by the first node to the second node after the first node completes downloading the information related to the information processing mode.

Based on the embodiments shown in FIG. 5, the second node may learn the N information processing modes supported by the first node based on the N information processing mode identifiers. That is, a consistent understanding for the information processing modes supported by the first node between the first node and the second node is implemented, so that the second node and the first node may negotiate to use one or more information processing modes among the N information processing modes.

In some embodiments, after the first node determines the information processing mode, as shown in FIG. 6, an information processing method is further provided in the embodiments of the present disclosure, including the following S501-S502.

In S501, a first node processes information according to a determined information processing mode to obtain a processing result.

In some embodiments, after the first node determines the information processing mode, the information may be processed according to the determined information processing mode to obtain the processing result.

In S502, the first node sends the processing result. Correspondingly, a second node receives the processing result.

In some embodiments, the processing result obtained after the channel information is processed with the information processing mode may include at least one of the following: channel state information, a positioning result, an intermediate positioning result and an estimated channel matrix, which is not limited herein.

The foregoing mainly introduces the solutions provided by the present disclosure from the perspective of interaction between various nodes. It can be understood that, in order to implement the above-mentioned functions, the various nodes, such as a base station and a terminal, includes corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

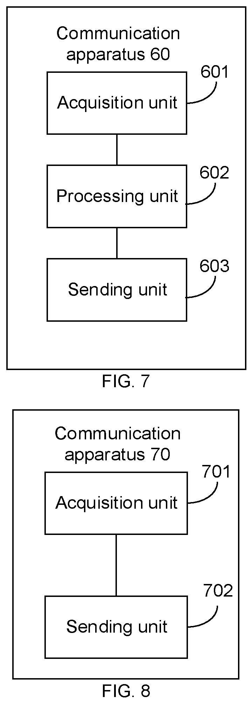

FIG. 7 is a schematic diagram of composition of a communication apparatus according to some embodiments. As shown in FIG. 7, the communication apparatus 60 includes an acquisition unit 601, a processing unit 602 and a sending unit 603.

The communication apparatus 60 may be the above-mentioned terminal of a chip in the terminal. When the communication apparatus 60 is configured to implement the functions of the terminal in the above-mentioned embodiments, the various units are configured to implement the following functions.

The acquisition unit 601 is configured to acquire an information processing mode parameter and M information processing mode identifiers. The information processing mode parameter at least includes a processing time threshold and/or information related to an operating task, and M is a positive integer.

The processing unit 602 is configured to determine an information processing mode according to the information processing mode parameter and the M information processing mode identifiers.

In some embodiments, the processing unit 602 is configured to select an information processing mode identifier among the M information processing mode identifiers; and determine an information processing mode indicated by the information processing mode identifier that is selected as the information processing mode.

In some embodiments, the M information processing mode identifiers correspond to M periods of processing time, and the processing unit 602 is configured to: determine K information processing modes according to the processing time threshold and the M periods of processing time; where processing time corresponding to each information processing mode among the K information processing modes is less than and/or equal to the processing time threshold, and K is a positive integer less than M.

In some embodiments, the sending unit 603 is further configured to send information related to the K information processing modes.

In some embodiments, the M information processing mode identifiers correspond to M periods of processing time, and the processing unit 602 is configured to: in response to that the M periods of processing time are all greater than and/or equal to the processing time threshold, determine a default information processing mode as the information processing mode, and the default information processing mode includes one of: an information processing mode corresponding a default information processing mode identifier; an information processing mode corresponding to a negotiated information processing mode identifier; an information processing mode corresponding to an original information processing mode identifier; and a traditional information processing mode.

In some embodiments, the sending unit 603 is further configured to send information related to a processing resource; where the processing resource is a resource for operating the information processing mode, and the information related to the processing resource includes at least one of: recommended processing time, a power consumption, a computing resource, a storage resource, a number of tasks, a processing resource not meeting a requirement, and a remaining processing resource not meeting a requirement.

In some embodiments, the sending unit 603 is further configured to send at least one piece of information as follows: recommended processing time, a power consumption, a computing resource, a storage resource, and a number of tasks.

In some embodiments, the sending unit 603 is further configured to send information related to an operating task of the first node.

In some embodiments, the information related to the operating task of the first node at least includes information related to a task recommended to be closed.

In some embodiments, the acquisition unit 601 is further configured to receive a task closing enable identifier.

The processing unit 602 is further configured to close a task corresponding to the information related to the task recommended to be closed in response to that the task closing enable identifier takes a first value; or to refuse to close the task corresponding to the information related to the task recommended to be closed in response to that the task closing enable identifier takes a second value.

In some embodiments, the information processing mode parameter includes the information related to the operating task. The information related to the operating task at least includes information related to a task recommended to be closed.

In some embodiments, the sending unit 603 is further configured to send a negative information, where the negative information is used to represent that the first node refuses to close all or a portion of tasks among tasks recommended to be closed.

In some embodiments, the processing unit 602 is further configured to process information according to the information processing mode that is determined, to obtain a processing result.

The sending unit 603 is further configured to send the processing result.

In some embodiments, an information processing mode identifier includes a first identifier and a second identifier, the first identifier is used to indicate scene information, and the second identifier is used to indicate an information processing mode in a scene indicated by the first identifier.

In some embodiments, an information processing mode identifier includes a third identifier, and the third identifier is used to indicate an information processing mode.

In some embodiments, an information processing mode identifier is associated with at least one of: a network identifier, a cell identifier, a sector identifier, a precoding index, a port group index, an information processing type, a channel type, a reference signal resource identifier, a reference signal resource set identifier, and a reference signal type.

FIG. 8 is a schematic diagram of composition of another communication apparatus according to some embodiments. As shown in FIG. 8, the communication apparatus 70 includes an acquisition unit 701 and a sending unit 702.

The communication device 70 may be the above-mentioned base station or a chip in the base station. When the communication apparatus 70 is configured to implement the functions of the base station in the above embodiments, the various units are configured to implement the following functions.

The acquisition unit 701 is configured to acquire an information processing mode parameter and M information processing mode identifiers. The information processing mode parameter at least includes a processing time threshold and/or information related to an operating task, and M is a positive integer; and the information processing mode parameter and the M information processing mode identifiers are used to determine an information processing mode.

The sending unit 702 is configured to send the information processing mode parameter and the M information processing mode identifiers.

In some embodiments, determining the information processing mode includes: selecting an information processing mode identifier among the M information processing mode identifiers; and determining an information processing mode indicated by the information processing mode identifier that is selected as the information processing mode.

In some embodiments, the M information processing mode identifiers correspond to M periods of processing time, and the processing time threshold and the M periods of processing time are used to determine K information processing modes; processing time corresponding to each information processing mode among the K information processing modes is less than and/or equal to the processing time threshold, and K is a positive integer less than M.

In some embodiments, the acquisition unit 701 is further configured to receive information related to the K information processing modes.

In some embodiments, M information processing mode identifiers correspond to M periods of processing time; in response to that the M periods of processing time are all greater than and/or equal to the processing time threshold, the information processing mode is a default information processing mode.

In some embodiments, the default information processing mode includes one of: an information processing mode corresponding a default information processing mode identifier; an information processing mode corresponding to a negotiated information processing mode identifier; an information processing mode corresponding to an original information processing mode identifier; and a traditional information processing mode.

In some embodiments, the acquisition unit 701 is further configured to receive information related to a processing resource. The processing resource is a resource for operating the information processing mode, and the information related to the processing resource includes at least one of: recommended processing time, a power consumption, a computing resource, a storage resource, a number of tasks, a processing resource not meeting a requirement, and a remaining processing resource not meeting a requirement.

In some embodiments, the acquisition unit 701 is further configured to receive at least one piece of information as follows: recommended processing time, a power consumption, a computing resource, a storage resource, and a number of tasks.

In some embodiments, the acquisition unit 701 is further configured to receive information related to an operating task of the first node.

In some embodiments, the information related to the operating task of the first node at least includes information related to a task recommended to be closed.

In some embodiments, the sending unit 702 is further configured to send a task closing enable identifier. The task closing enable identifier taking a first value represents that the first node is agreed to close a task corresponding to the information related to the task recommended to be closed; or the task closing enable identifier taking a second value represents that the first node is refused to close a task corresponding to the information related to the task recommended to be closed.

In some embodiments, the information processing mode parameter includes information related to an operating task of the first node, and the information related to the operating task of the first node at least includes information related to a task recommended to be closed.

In some embodiments, the acquisition unit 701 is further configured to receive negative information, where the negative information is used to represent that the first node refuses to close all or a portion of tasks among tasks recommended to be closed.

In some embodiments, the acquisition unit 701 is further configured to receive a processing result, where the processing result is a result of the first node processing information according to the determined information processing mode.

In some embodiments, an information processing mode identifier includes a first identifier and a second identifier, the first identifier is used to indicate scene information, and the second identifier is used to indicate an information processing mode in a scene indicated by the first identifier.

In some embodiments, an information processing mode identifier includes a third identifier, and the third identifier is used to indicate an information processing mode.

In some embodiments, an information processing mode identifier is associated with at least one of: a network identifier, a cell identifier, a sector identifier, a precoding index, a port group index, an information processing type, a channel type, a reference signal resource identifier, a reference signal resource set identifier, and a reference signal type.

It should be noted that the units in FIG. 7 and FIG. 8 may also be referred to as modules. For example, the sending unit may be referred to as a sending module. In addition, in the embodiments shown in FIG. 7 and FIG. 8, the names of the various units may not be the names shown in the figures. For example, the sending unit may also be referred to as a communication unit, and the acquisition unit may also be referred to as a communication unit.

If the various units are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of medium capable of storing program codes, such as a USB flash drive, a mobile disk, a Read-Only Memory (ROM), a Random-Access Memory (RAM), a magnetic disk, or an optical disk.

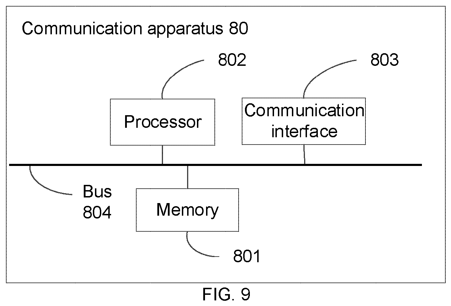

In a case where the communication apparatus 60 or the communication apparatus 70 implements the functions of the above-mentioned integrated modules by adopting the form of hardware, there is provided a structural schematic diagram of a communication apparatus in the embodiments of the present disclosure. As shown in FIG. 9, the communication apparatus 80 includes a memory 801, a processor 802, a communication interface 803, and a bus 804.

The memory 801 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 802 may implement or perform various exemplary logical blocks, modules and circuits described in combination with the present disclosure. The processor 802 may be a central processor, a general-purpose processor, a digital signal processor, an application specific integrated circuit, a field programmable gate array, or other programmable logic component, a transistor logic component, a hardware assembly, or any combination thereof. The processor 802 may implement or execute various illustrative logical blocks, modules and circuits described in conjunction with the disclosed contents of the present disclosure. The processor 802 may also be a combination that implements computing functions, for example, the processor 802 includes a combination of one or more microprocessors, a combination of a DSP (digital signal processor) and a microprocessor, or the like.

The communication interface 803 is configured to connect to other devices through a communication network. The communication network may be the Ethernet, a wireless access network, a wireless local area networks (WLAN), or the like.

In an embodiment, the memory 801 may exist independently from the processor 802, and the memory 801 may be connected to the processor 802 through the bus 804 for storing instructions or program codes. When the processor 802 invokes and executes instructions or program codes stored in the memory 801, the processor 802 may implement the information processing mode determination method and the information sending method provided in the embodiments of the present disclosure.

In an embodiment, the memory 801 may be integrated with the processor 802.

The bus 804 may be an extended industry standard architecture (EISA) bus, or the like. The bus 804 may be classified as an address bus, a data bus, a control bus, or the like. For ease of representation, only one thick solid line is used in FIG. 9 for representing the bus 804, but it does not indicate that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the base station or terminal may be divided into different functional modules to complete all or part of the functions described above.

A computer-readable storage medium is further provided in the embodiments of the present disclosure. All or part of the processes in the above method embodiments may be implemented by relevant information of an information hardware instructed by computer instructions. The programs may be stored in the above-mentioned computer-readable storage medium, and when executed, the programs may include the processes as described in the above method embodiments. The computer-readable storage medium may be an internal storage unit of a base station or a terminal provided in any one of the aforementioned embodiments, such as a hard disk or a memory of a computer device. The above-mentioned computer-readable storage medium may also be an external storage device of the above-mentioned base station or terminal, such as a plug-in hard disk, a smart media card (SMC), a secure digital (SD) card, a flash card, etc., equipped on the above-mentioned base station or terminal. Furthermore, the above-mentioned computer-readable storage medium may include both an internal storage unit and an external storage device of the above-mentioned base station or terminal. The above-mentioned computer-readable storage medium is configured to store the above-mentioned computer programs and other programs and data required by the above-mentioned base station or terminal. The above-mentioned computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer program product includes computer programs that, when run on a computer, enable the computer to execute any one of the information processing mode determination method and the information sending method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with specific features and embodiments thereof, obviously, various modifications and combinations may be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. An information processing mode determination method, **characterized in that** the method is applied to a first node, and comprises:
acquiring an information processing mode parameter and M information processing mode identifiers, wherein the information processing mode parameter at least comprises a processing time threshold and/or information related to an operating task, and M is a positive integer; and
determining an information processing mode according to the information processing mode parameter and the M information processing mode identifiers.

2. The method according to claim 1, wherein determining the information processing mode comprises:
selecting an information processing mode identifier among the M information processing mode identifiers; and
determining an information processing mode indicated by the information processing mode identifier that is selected as the information processing mode.

3. The method according to claim 1, wherein the M information processing mode identifiers correspond to M periods of processing time;
the determining the information processing mode according to the information processing mode parameter and the M information processing mode identifiers comprises:
determining K information processing modes according to the processing time threshold and the M periods of processing time, wherein processing time corresponding to each information processing mode among the K information processing modes is less than and/or equal to the processing time threshold, and K is a positive integer less than M.

4. The method according to claim 3, wherein the method further comprises:
sending information related to the K information processing modes.

5. The method according to claim 1, wherein the M information processing mode identifiers correspond to M periods of processing time;
the determining the information processing mode according to the information processing mode parameter and the M information processing mode identifiers comprises:
in response to that the M periods of processing time are all greater than and/or equal to the processing time threshold, determining a default information processing mode as the information processing mode.

6. The method according to claim 5, wherein the default information processing mode comprises one of:
an information processing mode corresponding a default information processing mode identifier;
an information processing mode corresponding to a negotiated information processing mode identifier;
an information processing mode corresponding to an original information processing mode identifier; and
a traditional information processing mode.

7. The method according to claim 1 or 5, wherein the method further comprises:
sending information related to a processing resource; wherein the processing resource is a resource for operating the information processing mode, and the information related to the processing resource comprises at least one of: recommended processing time, a power consumption, a computing resource, a storage resource, a number of tasks, a processing resource not meeting a requirement, and a remaining processing resource not meeting a requirement.

8. The method according to claim 1, wherein before the acquiring the information processing mode parameter and the M information processing mode identifiers, the method further comprises:
sending at least one piece of information as follows: recommended processing time, a power consumption, a computing resource, a storage resource, and a number of tasks.

9. The method according to claim 1 or 5, wherein the method further comprises:
sending information related to an operating task of the first node.

10. The method according to claim 9, wherein the information related to the operating task of the first node at least comprises information related to a task recommended to be closed.

11. The method according to claim 10, wherein after sending the information related to the operating task of the first node, the method further comprises:
receiving a task closing enable identifier;
in response to that the task closing enable identifier takes a first value, closing a task corresponding to the information related to the task recommended to be closed; or in response to that the task closing enable identifier takes a second value, refusing to close the task corresponding to the information related to the task recommended to be closed.

12. The method according to claim 1, wherein the information processing mode parameter comprises the information related to the operating task, wherein the information related to the operating task at least comprises information related to a task recommended to be closed.

13. The method according to claim 12, wherein the method further comprises:
sending a negative information, wherein the negative information is used to represent that the first node refuses to close all or a portion of tasks indicated by the information related to the task recommended to be closed.

14. The method according to claim 1, wherein the method further comprises:
processing information according to the information processing mode that is determined, to obtain a processing result; and
sending the processing result.

15. The method according to claim 1, wherein an information processing mode identifier comprises a first identifier and a second identifier, the first identifier is used to indicate scene information, and the second identifier is used to indicate an information processing mode in a scene indicated by the first identifier.

16. The method according to claim 1, wherein an information processing mode identifier comprises a third identifier, and the third identifier is used to indicate an information processing mode.

17. The method according to claim 1, wherein an information processing mode identifier is associated with at least one of: a network identifier, a cell identifier, a sector identifier, a precoding index, a port group index, an information processing type, a channel type, a reference signal resource identifier, a reference signal resource set identifier, and a reference signal type.

18. An information sending method, **characterized in that** the method is applied to a second node, and comprises:
acquiring an information processing mode parameter and M information processing mode identifiers, wherein the information processing mode parameter at least comprises a processing time threshold and/or information related to an operating task, and M is a positive integer; and the information processing mode parameter and the M information processing mode identifiers are used to determine an information processing mode; and
sending the information processing mode parameter and the M information processing mode identifiers.

19. The method according to claim 18, wherein determining the information processing mode comprises:
selecting an information processing mode identifier among the M information processing mode identifiers; and
determining an information processing mode indicated by the information processing mode identifier that is selected as the information processing mode.

20. The method according to claim 18, wherein the M information processing mode identifiers correspond to M periods of processing time; the processing time threshold and the M periods of processing time are used to determine K information processing modes, wherein processing time corresponding to each information processing mode among the K information processing modes is less than and/or equal to the processing time threshold, and K is a positive integer less than M.

21. The method according to claim 20, wherein the method further comprises:
receiving information related to the K information processing modes.

22. The method according to claim 18, wherein the M information processing mode identifiers correspond to M periods of processing time;
in response to that the M periods of processing time are all greater than and/or equal to the processing time threshold, a default information processing mode is determined as the information processing mode.

23. The method according to claim 22, wherein the default information processing mode comprises one of:
an information processing mode corresponding a default information processing mode identifier;
an information processing mode corresponding to a negotiated information processing mode identifier;
an information processing mode corresponding to an original information processing mode identifier; and
a traditional information processing mode.

24. The method according to claim 18, wherein the method further comprises:
receiving information related to a processing resource; wherein the processing resource is a resource for operating the information processing mode, and the information related to the processing resource comprises at least one of: recommended processing time, a power consumption, a computing resource, a storage resource, a number of tasks, a processing resource not meeting a requirement, and a remaining processing resource not meeting a requirement.

25. The method according to claim 18, wherein before the sending the information processing mode parameter and the M information processing mode identifiers, the method further comprises:
receiving at least one piece of information as follows: recommended processing time, a power consumption, a computing resource, a storage resource, and a number of tasks.

26. The method according to claim 18 or 22, wherein the method further comprises:
receiving information related to an operating task of a first node.

27. The method according to claim 26, wherein the information related to the operating task of the first node at least comprises information related to a task recommended to be closed.

28. The method according to claim 27, wherein after receiving the information related to the operating task of the first node, the method further comprises:
sending a task closing enable identifier, wherein the task closing enable identifier taking a first value represents that the first node is agreed to close a task corresponding to the information related to the task recommended to be closed, or the task closing enable identifier taking a second value represents that the first node is refused to close a task corresponding to the information related to the task recommended to be closed.

29. The method according to claim 18, wherein the information processing mode parameter comprises the information related to the operating task, wherein the information related to the operating task at least comprises information related to a task recommended to be closed.

30. The method according to claim 29, wherein the method further comprises:
receiving negative information, wherein the negative information is used to represent that the first node refuses to close all or a portion of tasks indicated by the information related to the task recommended to be closed.

31. The method according to claim 18, wherein the method further comprises:
receiving a processing result, wherein the processing result is a result that a first node processes information according to the information processing mode that is determined.

32. The method according to claim 18, wherein an information processing mode identifier comprises a first identifier and a second identifier, the first identifier is used to indicate scene information, and the second identifier is used to indicate an information processing mode in a scene indicated by the first identifier.

33. The method according to claim 18, wherein an information processing mode identifier comprises a third identifier, and the third identifier is used to indicate an information processing mode.

34. The method according to claim 18, wherein an information processing mode identifier is associated with at least one of: a network identifier, a cell identifier, a sector identifier, a precoding index, a port group index, an information processing type, a channel type, a reference signal resource identifier, a reference signal resource set identifier, and a reference signal type.

35. A communication apparatus, **characterized by** comprising: a processor and a memory; wherein
the memory stores instructions executable by the processor;
in response that the processor is configured to execute the instructions, the communication apparatus is enabled to implement the method according to any one of claims 1 to 34.

36. A computer-readable storage medium, wherein the computer-readable storage medium comprises computer instructions that, upon being run on a computer, enable the computer to execute the method according to any one of claims 1 to 34.
